(19) **Europäisches Patentamt / European Patent Office / Office européen des brevets**

(11) **EP 1 840 369 B1**

(12) **EUROPEAN PATENT SPECIFICATION**

(45) Date of publication and mention
of the grant of the patent:
**13.05.2009 Bulletin 2009/20**

(51) Int Cl.:
*F02N 11/08* (2006.01)    *F02D 41/06* (2006.01)

(21) Application number: **07004804.6**

(22) Date of filing: **08.03.2007**

(54) **Engine starting system**

Motoranlassersystem

Système de démarrage de moteur

(84) Designated Contracting States:
**DE**

(30) Priority: **31.03.2006   JP 2006101024**

(43) Date of publication of application:
**03.10.2007   Bulletin 2007/40**

(73) Proprietor: **Mazda Motor Corporation
Aki-gun,
Hiroshima 730-8670 (JP)**

(72) Inventor: **Tetsuno, Masayuki
Aki-gun
Hiroshima 730-8670 (JP)**

(74) Representative: **Müller-Boré & Partner
Patentanwälte
Grafinger Strasse 2
81671 München (DE)**

(56) References cited:
**EP-A- 1 533 501          EP-A- 1 591 658
EP-A- 1 600 629          EP-A1- 1 403 512
WO-A-01/81759          DE-A1- 19 955 857**

**Description**

**BACKGROUND OF THE INVENTION**

**1. Field of the Invention**

The present invention relates to an engine starting system for allowing an engine which is temporarily in a stopped state to be automatically started at a subsequent timing.

**2. Background Art**

Late years, with a view to reduction of fuel consumption, suppression of $CO_2$ emissions, etc., there has been developed an engine starting system designed to automatically stop an engine during idling on a temporary basis, and then automatically restarting the engine when a restart condition, such as an operational condition related to vehicle starting, is satisfied.

Considering the need for quickly starting the engine in response to satisfaction of the restart condition during the above engine restart process, it is not a good idea to directly employ a conventional typical starting technique designed to start an engine through a cranking process of driving an engine output shaft using a starter (starter motor) because it requires substantial time to complete the starting.

From this standpoint, a new starting technique is being developed, wherein fuel is supplied to one of a plurality of cylinders of an engine which is in an expansion stroke when the engine is in a stopped state ("a cylinder which is in an expansion stroke during stop of an engine" will hereinafter be referred to as "stopped-state expansion-stroke cylinder" for the sake of simplicity; each of the remaining cylinders in another engine stroke will be referred to in the same manner) to produce combustion so as to allow the engine to be quickly started based on energy of the combustion.

For example, there has been proposed one technique of initially producing combustion in a stopped-state compression-stroke cylinder to reversely rotate an engine and then producing combustion in a stopped-state expansion-stroke cylinder to generate a normal-directional torque in the engine so as to automatically restart the engine (so-called "reverse-rotation starting technique").

Although the reverse-rotation starting technique has a high level of certainty about success in starting (i.e., restart quality) as one type of non-assisted combustion-based starting technique, the certainty has not reached a level of the starter-based starting technique so far. In this context, it is contemplated to start the engine with the assistance of a starter when a restart process based on the non-assisted combustion-based starting technique results in failure or a prediction about the failure is detected (so-called "backed-up starting control strategy").

For example, Japanese Patent Laid-Open Publication No. 2005-315197 (JP 2005-315197A) discloses an engine starting system designed to determine the necessity of execute the backed-up starting control strategy at a given checkup timing after initiation of a restart process based on the non-assisted combustion-based starting technique, and execute the backed-up starting control strategy depending on the necessity. In this system, the execution of the backed-up starting control strategy is based on the assumption that a normal-directional torque obtained from initial combustion in a stopped-state expansion-stroke cylinder is enough to allow an engine in a reverse rotated state to be shifted to a normal rotation state, but not to successfully complete a restart process.

However, in the reverse-rotation starting technique, there are more failure modes than that assumed in the JP 2005-315197A. For example, the failure is likely to occur in a manner that almost no normal-directional torque is obtained from initial combustion in a stopped-state expansion-stroke cylinder due to misfire or the like, and thereby the reverse rotation state of the engine will be continued to cause a cylinder to undergo a transition to the previous engine stroke. In this specification, this failure mode will be referred to as "excessive reverse rotation". A countermeasure against the excessive reverse rotation is hardly achieved by the control process disclosed in the JP 2005-315197A.

While an occurrence frequency of the excessive reverse rotation would be relatively low, it is desirable from the viewpoint of ensuring reliable restart to establish a backed-up starting control strategy capable of coping with any failure mode including the excessive reverse rotation.

EP-A-1 591 658 discloses an engine starting system comprising start-adequacy evaluation means for causing a start assist device to be driven when an inspection engine speed is regarded to be less than an engine speed required for normally restarting the engine.

EP-A-1 533 501 discloses an engine starting system which injects fuel into an expansion stroke cylinder which is relatively close to TDC. The injected fuel is ignited and combusted and, thereafter, fuel is injected, ignited and combusted in a compression stroke cylinder when the piston thereof has gone beyond TDC.

It is, thus, an object of the present invention to provide an engine starting system capable of solving the above problem.

## SUMMARY OF THE INVENTION

In order to achieve this object, the present invention provides an engine starting system including restart control means for performing an automatic restart control process of automatically restarting a multicylinder engine which is temporarily in a stopped state, in such a manner as to produce combustion in a first cylinder which is in a compression stroke during stop of the engine, in response to satisfaction of a given restart condition, to reversely rotate the engine, and then produce combustion in a second cylinder which is in an expansion stroke during stop of the engine, to generate a normal-directional torque in the engine. The engine starting system is characterized by comprising a starter motor adapted to apply a normal-directional driving force to the engine, wherein the restart control means is operable to execute a backed-up starting control strategy of activating the starter motor at a given timing in a course of the automatic restart control process, depending on the necessity, in such a manner that the backed-up starting control strategy is determined to be necessary, when any of the cylinders passes beyond a top dead center due to continuation of a reverse rotation state of the engine after the combustion for reversely rotating the engine, and the timing of applying the driving force from the starter motor in the backed-up starting control strategy is set around a time when the engine is shifted from the reverse rotation state to a normal rotation state. Additionally, the restart control means is operable to supply additional fuel to the second cylinder when it undergoes a compression stroke due to the continuation of the reverse rotation state to lower the in-cylinder temperature/pressure by latent heat of vaporization of the injected fuel so as to suppress the occurrence of auto-ignition.

## BRIEF DESCRIPTION OF THE DRAWINGS

FIG. 1 is a schematic sectional view showing an engine having a starting system according to one embodiment of the present invention.

FIG. 2 is an explanatory diagram showing the structure of intake and exhaust systems of the engine.

FIG. 3A is a schematic diagram showing a relationship between a stopped-state compression-stroke cylinder and a stopped-state expansion-stroke cylinder of the engine, particularly, a positional relationship between respective pistons of the stopped-state compression-stroke cylinder and the stopped-state expansion-stroke cylinder.

FIGS. 3B is a graph showing a relationship between the stopped-state compression-stroke cylinder and the stopped-state expansion-stroke cylinder of the engine, particularly, a relationship between a piston stop position and an air volume in each of the cylinders.

FIG. 4 is a time chart showing an automatic engine restart control process including a backed-up starting control strategy.

FIG. 5 is a flowchart showing an initial stage of the automatic engine restart control process including the backed-up starting control strategy.

FIG. 6 is a flowchart showing a last stage of the automatic engine restart control process in FIG. 5.

## DESCRIPTION OF THE PREFERRED EMBODIMENTS OF THE INVENTION

With reference to the drawings, an embodiment of the present invention will now be described.

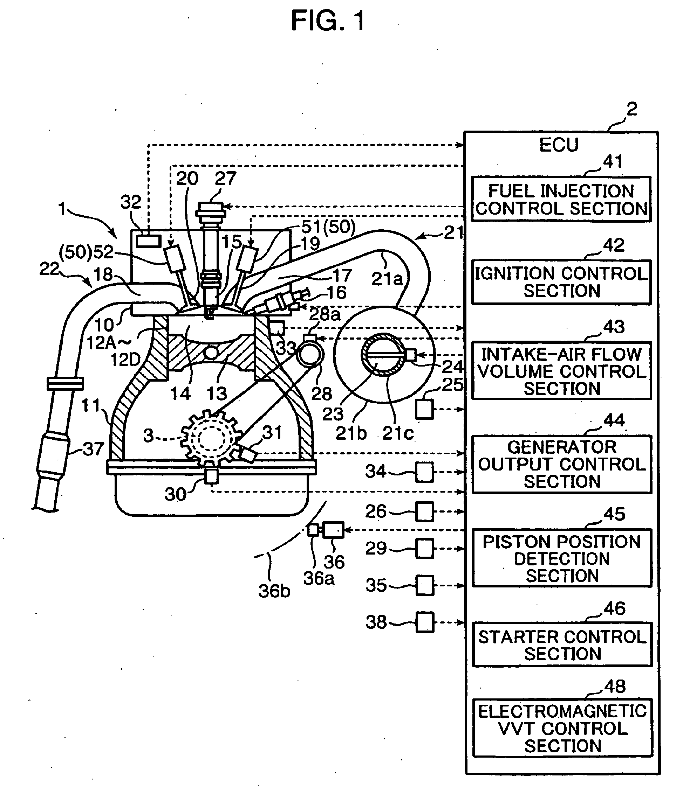

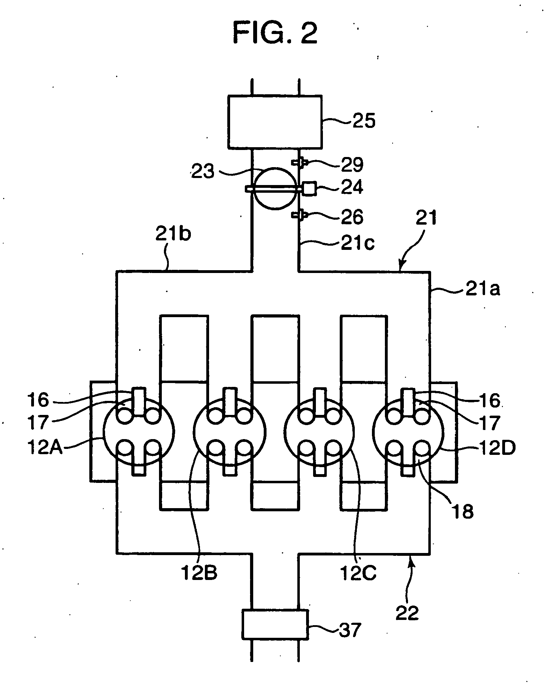

FIGS. 1 and 2 schematically show the structure of a four-stroke spark-ignition engine having an engine starting system according to one embodiment of the present invention. This engine comprises an engine body 1 including a cylinder head 10 and a cylinder block 11, and an engine control ECU 2. The engine body 1 has a plurality of cylinders (four cylinders in this embodiment) 12A to 12D. Each of the cylinders 12A to 12D has a piston 13 which is slidably fitted thereinto and connected to a crankshaft 3 through a connecting rod (not shown), and a combustion chamber 14 defined above the piston 13.

The combustion chamber 14 in each of the cylinders 12A to 12D has a top wall portion provided with a spark plug 15 having a tip exposed to the combustion chamber 14. The combustion chamber 14 also has a side wall portion provided with a fuel injection valve 16 (fuel supply means) adapted to inject fuel directly into the combustion chamber 14. This fuel injection valve 16 is internally provided with a needle valve and a solenoid (not shown), and adapted to be activated and opened in response to an input of a pulse signal and only in a time period corresponding to a pulse width of the input pulse signal so as to inject fuel in an amount corresponding to the valve open period. The fuel injection valve 16 is oriented to inject fuel toward a vicinity of the tip of the spark plug 15.

An intake port 17 and an exhaust port 18 are opened to the combustion chamber 14 in each of the cylinders 12A to 12D, and an intake valve 19 and an exhaust valve 20 are associated with the intake port 17 and the exhaust port 18, respectively. Each of the intake valve 19 and the exhaust valve 20 is designed to be driven by an electromagnetic variable valve timing (VVT) mechanism 50 (electromagnetic valve operating mechanism).

**EP 1 840 369 B1**

The electromagnetic VVT mechanism 50 is an electromagnetic valve operating mechanism adapted to openably and closably drive each of the intake and exhaust valves 19, 20 based on an electromagnetic force. The electromagnetic VVT mechanism 50 has a conventional structure, and the structure will be briefly described below. The electromagnetic VVT mechanism 50 is designed to turn on/off an electromagnet so as to directly open and close each the intake and exhaust valves 19, 20 and is one type of VVT mechanisms. This electromagnetic VVT mechanism 50 has fairly high flexibility in control as compared with other type of VVT mechanisms, and can open and close each of the intake and exhaust valves 19, 20 at any crank angle. The electromagnetic VVT mechanism 50 includes an intake-side VVT mechanism 51 for the intake valve 19, and an exhaust-side VVT mechanism 52 for the exhaust valve 20.

The intake port 17 and the exhaust port 18 are connected to an intake passage 21 and an exhaust passage 22, respectively. As shown in FIG 2, the intake passage 21 has a downstream portion which is located close to the intake ports 17 and formed as a plurality of branched intake passages 21a independently communicating with the corresponding cylinders 12A to 12D, and a surge tank 21b communicating with respective upstream ends of the branched intake passages 21a. The intake passage 21 also has a common intake passage 21c on an upstream side of the surge tank 21b. The common intake passage 21c is provided with intake-air flow volume adjustment means which comprises a throttle valve 23 adapted to be driven by an actuator 24. An idle speed control (ISC) unit (not shown) may be associated with the throttle valve 23 to adjust an engine speed during idling of the engine. On an upstream side of the throttle valve 23, the common intake passage 21c is also provided with an air flow sensor 25 adapted to detect an intake-air flow volume, and an intake-air temperature sensor 29 adapted to detect an intake-air temperature. On a downstream side of the throttle valve 23, the common intake passage 21c is further provided with an intake pressure sensor 26 adapted to detect an intake pressure (boost pressure). The exhaust passage 22 is provided with an exhaust gas purifying device 37.

An alternator (power generator) 28 is associated with the engine body 1 in such a manner as to be coupled to the crankshaft 3 through a timing belt or the like. The alternator 28 comprises a regulator circuit 28a adapted to control a current to be applied to a field coil (not shown), so as to adjust an output voltage, so that, during a normal engine operation, the alternator 28 is operable, based on a control signal from the ECU 2, to generate a target output current corresponding to an electric load of a vehicle, a voltage of an in-vehicle battery, etc.

Further, the engine body 1 is provided with a starter motor (hereinafter referred to as "starter 36") adapted to drive a ring gear 36b directly connected to the crankshaft 3. When necessary, the starter 36 is operable to engage a pinion gear 36a thereof with the ring gear 36b and then drive the pinion gear 36a so as to drivingly rotate the engine in a normal direction. A motor integrated with an alternator [i.e., integrated starter generator (ISG)] may be used as the starter 36. The starter 36 is used not only during a usual engine starting operation, but also during selective (i.e., as-necessary) execution of a backed-up starting control strategy in a course of an automatic restart control process in this embodiment.

The engine is provided with first and second crank angle sensors 30, 31 each adapted to detect a rotational angle of the crankshaft 3. An engine speed is detected based on a detection signal generated from the first crank angle sensor 30, and a rotational direction and a rotational angle of the crankshaft 3 are detected based on respective detection signals generated from the first and second crank angle sensors 30, 31 with a phase lag.

The engine is also provided with a cam angle sensor 32 adapted to detect a specific rotational position of a camshaft (not shown) so as to generate a cylinder discrimination signal for discriminating the cylinders from each other, and a coolant temperature sensor 33 adapted to detect an engine coolant temperature. Further, the engine is provided with an accelerator pedal angle sensor 34 adapted to detect an accelerator pedal angle corresponding to a displacement amount of an accelerator pedal based on a driver's manipulation, a brake sensor 35 adapted to detect that a driver manipulates a brake, and a vehicle speed sensor 38 adapted to detect a vehicle speed.

The ECU 2 is a control unit adapted to comprehensively control an engine operation. In this embodiment, the ECU 2 is designed to perform an automatic restart control process of automatically restarting an engine in a temporarily stopped state when a restart condition is satisfied, for example, as a result of driver's manipulation of the accelerator pedal. That is, the ECU 2 serves as restart control means.

As a detailed description about the ECU 2, the following description will be made mainly about the automatic restart control process and the backed-up starting control strategy.

The ECU 2 is operable to receive respective detection signals from the air flow sensor 25, the intake pressure sensor 26, the intake-air temperature sensor 29, the crank angle sensors 30, 31, the cam angle sensor 32, the coolant temperature sensor 33, the accelerator pedal angle sensor 34, the brake sensor 35 and the vehicle speed sensor 38, and send a drive signal to each of the fuel injection valves 16, the actuator 24 of the throttle valve 23, the ignition devices 27 of the spark plugs 27, the regulator circuit 28a of the alternator 28 and the starter 36. The ECU 2 functionally includes a fuel injection control section 41, an ignition control section 42, an intake-air flow volume control section 43, an alternator output control section 44, a piston position detection section 45, a starter control section 46 and an electromagnetic VVT control section 48.

The fuel injection control section 41 serves as fuel injection control means adapted to set a fuel injection timing and a fuel injection amount for each fuel injection operation, and then send a corresponding signal to each of the fuel

4

injection valves 16.

The ignition control section 42 is operable to set an ignition timing suitable for each of the cylinders 12A to 12D, and then send a corresponding ignition signal to each of the ignition devices 27.

The intake-air flow volume control section 43 is operable to set an intake-air flow volume suitable for each of the cylinders 12A to 12D, and then send a signal representing a corresponding opening degree of the throttle valve 23 to the actuator 24. When the ISC unit is associated with the throttle valve 23, the intake-air flow volume control section 43 is also operable to control the ISC unit (i.e., control an idle speed).

The alternator output control section 44 is operable to set an appropriate output of the alternator 28 and then send a corresponding drive signal to the regulator circuit 28a. Particularly, the ECU 2 in this embodiment is designed to perform an automatic engine stop control process of adjusting an output of the alternator 28 to change a load on the crankshaft 3 so as to allow the piston 13 to be stopped within an adequate range suitable for restart. In this control, the alternator output control section 44 is operable to adjust the output of the alternator 28.

The piston position detection section 45 is operable, based on respective detection signals of the crank angle sensors 30, 31, to detect a piston position. The piston position and a crank angle (°CA) have a one-to-one correspondence relationship. Thus, in this specification, the piston position is represented by the crank angle, as in a common practice. In this embodiment, an air volume in each of the cylinders (in-cylinder air volume) is calculated based on a piston position in each of a stopped-state expansion-stroke cylinder and a stopped-state compression-stroke cylinder of the engine in an automatically stopped state, and then combustion in each of the cylinders is controlled according to the calculation result, during the automatic restart control process

The starter control section 46 performs a drive control of the starter 36. In a normal engine operation, the starter control section 46 is operable, in response to driver's engine starting manipulation, to send a drive signal to the starter 36. The starter control section 46 is also operable, when it is necessary to execute the backed-up starting control strategy configured to assist an engine staring operation by the starter 36, in the course of the automatic restart control process, to send a drive signal to the starter 36.

The electromagnetic VVT control section 48 serves as valve timing control means adapted to set open/close timings of the intake valve 19 and the exhaust valve 20 according to the electromagnetic VVT mechanism 50.

In this embodiment, when the automatic restart control process is performed by the ECU 2, combustion is initially produced in a stopped-state compression-stroke cylinder to pushingly move a piston 13 of the cylinder downwardly so as to reversely rotate the crankshaft 3 by a small angle. Thus, a piston 13 of a stopped-state expansion-stroke cylinder is moved upwardly [i.e., moved closer to a top dead center (TDC)] to compress air in the cylinder (an air-fuel mixture is formed after fuel injection). Then, the air-fuel mixture is ignited to produce combustion so as to exert a normal-directional drive torque on the crankshaft 3 to restart the engine

As above, in this automatic restart control process, the engine is fundamentally restarted by igniting fuel injected into a specific cylinder without using the starter 36. In order to adequately restart the engine in this manner, it is necessary to reliably obtain sufficient combustion energy from combustion of the air-fuel mixture in the stopped-state expansion-stroke cylinder so as to allow each piston of other cylinders (in this embodiment, the stopped-state compression-stroke cylinder and a stopped-state intake-stroke cylinder) which will be moved toward a top dead center in a compression stroke (hereinafter referred to as "compression TDC") subsequently to the piston of the stopped-state expansion-stroke cylinder, to pass beyond the compression TDC against a compression reaction force therein. This means the need for ensuring a sufficient volume of air in the stopped-state expansion-stroke cylinder.

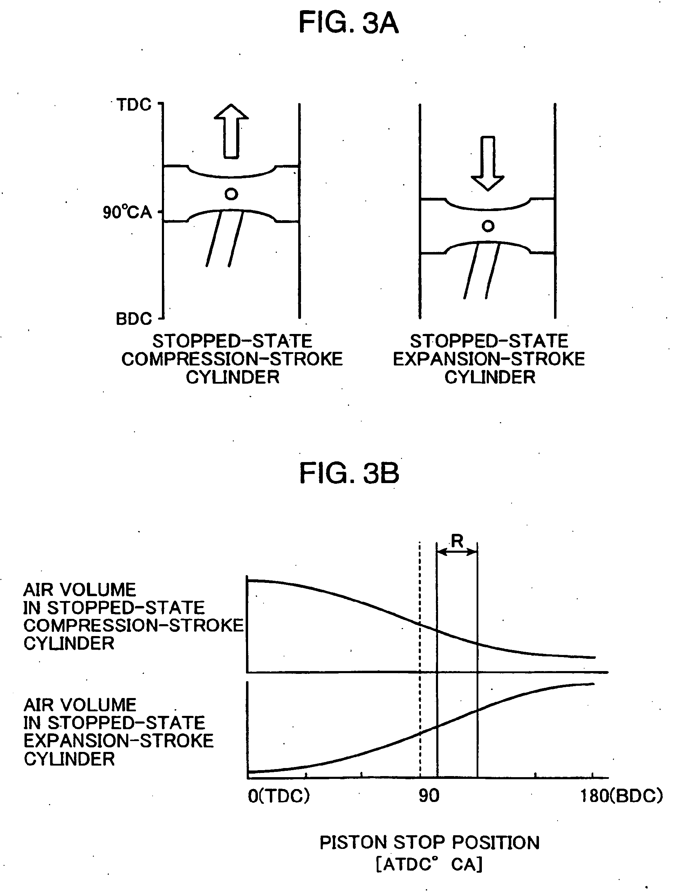

As shown in FIGS. 3A and 3B, respective pistons 13 of a stopped-state compression-stroke cylinder and a stopped-state expansion-stroke cylinder are moved in opposite directions because these cylinders are different in phase from each other by 180°CA. When the piston 13 of the stopped-state expansion-stroke cylinder is located on the side of a bottom dead center (BDC) relative to a midpoint of the stroke, the stopped-state expansion-stroke cylinder can have a larger volume of air to obtain sufficient combustion energy. However, if the piston 13 of the stopped-state expansion-stroke cylinder is located at a position excessively close to the BDC, a volume of air in the stopped-state compression-stroke cylinder will be excessively reduced to cause difficulty in sufficiently obtaining combustion energy for reversely rotating the crankshaft 3 by the initial combustion in the automatic restart control process.

Thus, if the piston 13 of the stopped-state expansion-stroke cylinder can be stopped within a given range R slightly on the side of BDC relative to a position corresponding a crank angle after compression TDC of 90°CA, for example, at a position where the crank angle after compression TDC is in a range of 100°CA to 120°CA, a given volume of air will be ensured in the stopped-state compression-stroke cylinder to obtain combustion energy from the initial combustion to an extent allowing the crankshaft 3 to be reversely rotated by a small angle. In addition, a large volume of air can be ensured in the stopped-state expansion-stroke cylinder so that combustion energy for normally rotating the crankshaft 3 can be sufficiently generated to reliably restart the engine. The above range R will hereinafter be referred to as "adequate stop range R". From this point of view, the ECU 2 is designed to perform an automatic engine stop control process, for example, of adjusting an opening degree of the throttle valve 23, so as to stop the piston 13 within the adequate stop range R.

As to the automatic engine stop control process, various techniques have been proposed, and a technical content thereof is disclosed in details, for example, in JP 2005-315197. Thus, the automatic engine stop control process will be briefly described below. In response to satisfaction of a given automatic stop condition, fuel supply to the engine is interrupted. Thus, an engine speed will be gradually reduced, and the engine will be fully stopped in a while. In a period from a timing around the interruption of the fuel supply to the engine through until the engine is fully stopped, the opening degree of the throttle valve 23, the output of the alternator 28 and others are controlled to allow the piston 13 to be finally stopped within the adequate stop range R. The following description will be made on the assumption that the piston 13 has been successfully stopped within the adequate stop range R.

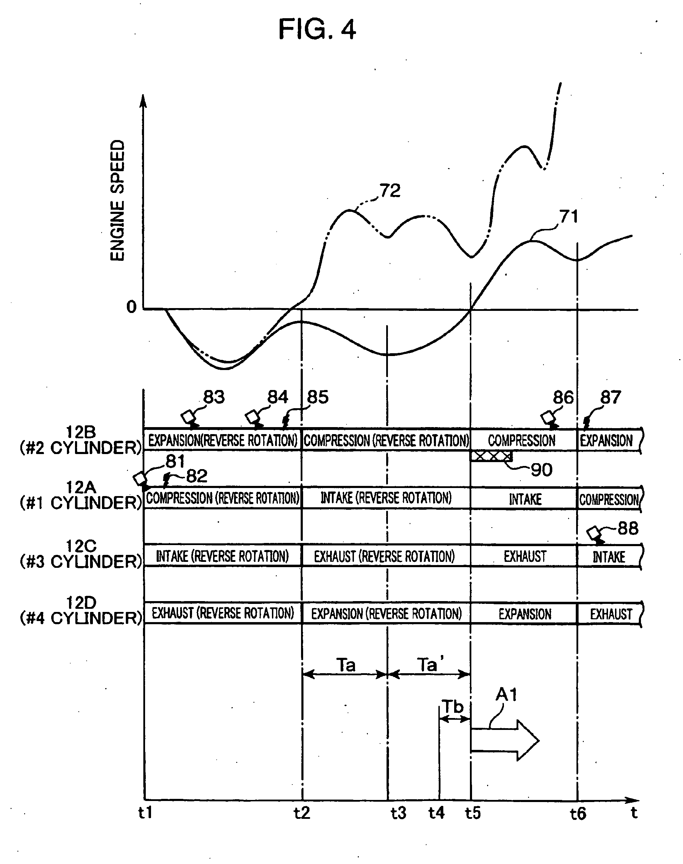

FIG. 4 is a time chart showing the automatic restart control process including the backed-up starting control strategy, wherein the transition of the engine speed, the transition of the strokes in each of the cylinders, and the transition of the drive control of the starter 36 during the backed-up starting control strategy, are shown in upper, intermediate and lower charts, respectively.

For the purpose of simplifying explanation, given that, at Time t1 when the engine is fully stopped, the #1 cylinder 12A, the #2 cylinder 12B, the #3 cylinder 12C and the #4 cylinder 12D are in a compression stroke, in an expansion stroke, in an intake stroke and in an exhaust stroke, respectively. Further, the #1 cylinder 12A, the #2 cylinder 12B, the #3 cylinder 12C and the #4 cylinder 12D will be referred to as "stopped-state compression-stroke cylinder", "stopped-state expansion-stroke cylinder", "stopped-state intake-stroke cylinder" and "stopped-state exhaust-stroke cylinder", respectively.

As to characteristics of the engine speed, a characteristic 72 indicated by the two-dot chain line shows a characteristic in a normal automatic restart control process, i.e., when the engine is successfully restated based on the reverse-rotation starting technique. Further, a characteristic 71 indicated by the solid line shows a characteristic when an excessive reverse rotation occurs as the result of the engine starting operation based on the reverse-rotation starting technique, and thereby the engine is started using the backed-up starting control strategy. The intermediate and lower charts relate to the characteristic 71.

The characteristic in the normal automatic restart control process will be first described. When a given engine restart condition is satisfied at Time t1 (for example, the engine restart condition is satisfied when at least one of determinations on whether an accelerator pedal is manipulated, whether a brake is not manipulated, whether an air conditioner is turned on, and whether a battery voltage is lowered to a given value or less, is YES), the ECU 2 first calculates a volume of air in each of the stopped-state compression-stroke cylinder 12A and the stopped-state expansion-stroke cylinder 12B based on a stop position of the piston 13 thereof, and sets a fuel injection amount (i.e., an amount of fuel to be injected into each of the cylinders) in accordance with the calculated in-cylinder air volume.

Then, a 1st fuel injection 81 is performed for the stopped-state compression-stroke cylinder 12A. Preferably, the fuel injection 81 is made to form an air-fuel mixture having a theoretical air-fuel ratio or a richer air-fuel ratio than that. This makes it possible to obtain sufficient combustion energy for the reverse rotation even when a volume of air in the stopped-state compression-stroke cylinder 12A is relatively small.

Then, after a given time preset in consideration of a time required for vaporization of the injected fuel has elapsed from the fuel injection 81, an ignition 82 is performed for the stopped-state compression-stroke cylinder 12A. This produces combustion to reversely rotate the engine (crankshaft 3). That is, the engine speed has a negative value.

After confirming that the pistons 13 are moved (start being reversely moved) within a given time period from the ignition 82, based on signals from the crank angle sensors 30, 31, a 2nd fuel injection is performed for the stopped-state expansion-stroke cylinder 12B. In this embodiment, the fuel injection for the stopped-state expansion-stroke cylinder 12B is divided into a primary fuel injection 83 and a secondary fuel injection 84 to allow split injection to be performed. Fuel injected from the primary fuel injection 83 can be sufficiently vaporized. Further, an increase in in-cylinder pressure caused by a movement of the piston 13 of the stopped-state expansion-stroke cylinder 12B toward a TDC is effectively suppressed by fuel injected from the secondary fuel injection 84, so that the piston 13 can be moved upwardly to a position closer to the TDC. The primary fuel injection 83 may be performed at an earlier timing, for example, at a timing approximately equal to that of the fuel injection 81 or earlier than that of the fuel injection 81 (before satisfaction of the restart condition).

Then, after an elapse of a given delay time, an air-fuel mixture in the stopped-state expansion-stroke cylinder 12B is ignited (85) to produce combustion. Based on the combustion induced by the ignition 85 in the stopped-state expansion-stroke cylinder 12B, the engine is shifted from the reverse rotation state to a normal rotation state (around Time t2). Afterward, combustion will be performed according a normal engine control process.

The characteristic in occurrence of the excessive reverse rotation (the characteristic 71 of the engine speed) will be described below. In this case, the characteristic before the ignition 85 is the same as that in the above case. Differently from the above case, after the ignition 85, combustion energy in the stopped-state expansion-stroke cylinder 12B cannot be sufficiently obtained for some reason, such as misfire or defective combustion. Therefore, as to the stopped-state expansion-stroke cylinder 12B, due to continuation of the reverse rotation state, the piston 13 is reversely moved to the previous engine stroke, i.e., a compression stroke, after passing beyond a compression TDC (Time t2).

In response to occurrence of the excessive reverse rotation, the ECU 2 initiates the backed-up starting control strategy. In the backed-up starting control strategy, a standby state will be continued until the stopped-state expansion-stroke cylinder 12B is shifted to the normal rotation state. In the example illustrated in FIG. 4, the stopped-state exhaust-stroke cylinder 12D undergoes a reverse-directional expansion stroke. That is, during the excessive reverse rotation, the piston 13 of the stopped-state exhaust-stroke cylinder 12D is being moved upwardly from a BDC toward a TDC, and the a resulting compression reaction force will allow the engine to be shifted to the normal rotation state (Time t5).

In response to detection of this timing, preferably, when the engine speed is in the range of about zero to + 60 rpm, a normal-directional driving force is applied from the starter 36 to the crankshaft 3 through the ring gear 36b (A1). Based on this strong driving force, the engine is rotated in the normal direction and reliably started.

In this process, a time lag Tb inevitably exists between a time when the starter control section 46 generates a drive initiation signal and a time when the starter 36 actually applies the driving force to the crankshaft 3. Thus, the crankshaft 3 can receive the driving force from the starter 36 at Time t5 in FIG. 4 only if the starter control section 46 sends the drive initiation signal to the starter 36 at a timing earlier than Time t5 by the time lag Tb, i.e., at Time t4.

A method of calculating the drive initiation time t4 will be described below.

The drive initiation time t4 is calculated by the starter control section 46 according to the following formula:

$$(t4) = (t3) + (Ta) - (Tb) \qquad \text{---- (Formula 1)}$$

In Formula 1, t3 is a basis point for calculating the drive initiation time t4, specifically, a time when a piston passes through a midpoint (i.e., midway point; 90°CA) of an engine stroke. A relationship of Time t2, Time t5 and the basis point t3 will be described below. Time t2 is a boundary between the adjacent engine strokes, i.e., a time when a moving direction of the piston 13 is reversed. Time t5 is a time when the engine is shifted from the reverse rotation state to the normal rotation state, i.e., a time when a moving direction of the piston 13 is reversed, as with Time t2. That is, a time period between Time t2 and Time t5 corresponds to a 1/2 cycle of a damped vibration of the piston 13. The damped vibration has a characteristic that a change in cycle time is relatively small even if an amplitude fluctuates. Thus, a temporal midpoint between Time t2 and Time t5 can serve as the basis point t3 which is a center of the damped vibration, i.e., a midway point of the engine stroke.

Thus, the following Formula 2 is satisfied, and further the following Formula 3 is satisfied as is clear from FIG. 4:

$$(Ta) = (Ta') = (1/4 \text{ cycle of damped vibration}) \qquad \text{--- (Formula 2)}$$

$$(t4) = (t3) + (Ta') - (Tb) \qquad \text{--- (Formula 3)}$$

Formula 1 can be derived from Formula 2 and Formula 3.

Time Ta is an elapsed time from Time t2 to Time t3. Thus, after Time t3, the starter control section 46 can use Time Ta as a known value. Further, the time lag Tb can be prepared as a known value by correcting a preset value obtained by an experiment test or the like, in consideration of a correction factor, such as a battery voltage. Therefore, at a time just after the basis point t3, the drive initiation time t4 can be calculated by Formula 1.

In this manner, the drive initiation time t4 can be calculated readily and accurately, using Time t3 as the basis point. This also makes it possible to reduce a load to be imposed on the starter, so as to suppress deterioration in durability thereof.

After Time t5, the engine is shifted to the normal rotation state. At this moment, an in-cylinder temperature/pressure of the stopped-state expansion-stroke cylinder 12B is likely to have a relatively high value due to the combustion induced by the ignition 85 (even if it is imperfect combustion). From this standpoint, in this embodiment, additional fuel injection 86 is performed in a compression stroke of the stopped-state expansion-stroke cylinder 12B. The in-cylinder temperature/pressure is lowered by latent heat of vaporization of the additionally injected fuel to effectively suppress occurrence of auto-ignition in the stopped-state expansion-stroke cylinder 12B.

Note that the additionally injected fuel is burnt with an ignition 87 in the next expansion stroke, which enables generation of the torque in a drive in a forward direction, thereby improving the starting performance.

In a state when the auto-ignition is likely to occur due to a high temperature of the engine, the electromagnetic WT mechanism 50 is operated to open the intake valve 19 of the stopped-state expansion-stroke cylinder 12B (valve open period 90). This makes it possible to lower the in-cylinder pressure so as to further suppress the occurrence of auto-ignition. In addition, a fuel injection amount in the additional fuel injection 86 can be reduced as compared with a backed-up starting control strategy configured to lower the in-cylinder pressure only by the additional fuel injection, and it can also be expected to introduce flesh air by opening the intake valve 19, so as to reduce smoke (black smoke) which is likely to be generated from combustion of the additionally injected fuel.

After Time t6, combustion will be performed according the normal engine control process to smoothly complete restart.

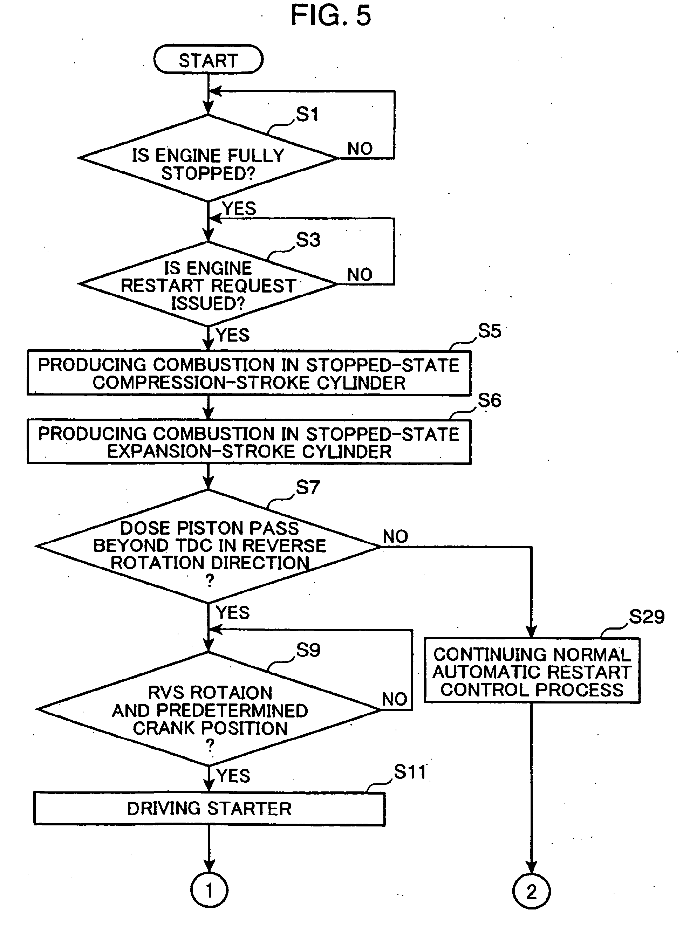

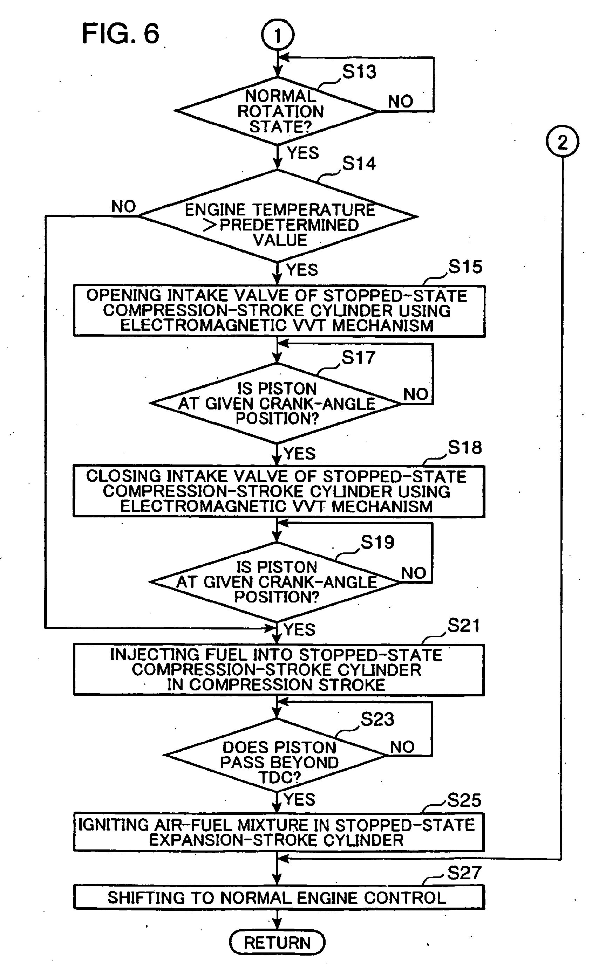

FIGS. 5 and 6 are a flowchart showing the automatic restart control process including the backed-up starting control strategy. After the engine is fully stopped through the automatic engine stop control process (YES in Step S1), when a request for engine restart is issued (i.e., a automatic restart condition is satisfied) (YES in Step S3), combustion is produced in the stopped-state compression-stroke cylinder 12A to reversely rotate the engine (Step S5). Then, combustion is produced in the stopped-state expansion-stroke cylinder 12B (Step S6).

Then, it is determined whether the piston of the stopped-state expansion-stroke cylinder 12B passes beyond the compression TDC due to continuation of the reverse rotation state (Step S7). If YES, it is judged that the excessive reverse rotation occurs, and the backed-up starting control strategy is initiated (placed in the standby state). Then, it is determined whether each piston of the cylinders is reversely moved to a given crank-angle position (a midpoint between the TDC and the BDC) in the previous engine stroke (Step S9). A time when the determination is made as YES in Step S9 is used as the basis point t3. Just after the basis point t3, the drive initiation time t4 is calculated, and the drive initiation signal is generated to drive the starter 36 (Step S11).

Then, after the engine is shifted from the reverse rotation state to the normal rotation state (YES in Step S13), it is determined whether the engine temperature is greater than a given value, i.e., the engine in a high-temperature state (Step S14). A coolant temperature to be detected by the coolant temperature sensor 33 is used as substitute for the engine temperature. When the determination in Step S14 is YES, the electromagnetic VVT mechanism 50 is operated to open the intake valve 19 of the stopped-state expansion-stroke cylinder 12B for a given time period (Steps S15 to S19). This makes it to effectively suppress the occurrence of auto-ignition. If the determination in Step S14 is NO, Steps S15 to S19 will be skipped to prevent lowering of the in-cylinder temperature/pressure of the stopped-state expansion-stroke cylinder 12B.

In either case, additional fuel is then injected into the stopped-state expansion-stroke cylinder 12B in the compression stroke in the normal rotation state (Step S21) to suppress the occurrence of auto-ignition. Then, after the piston of the stopped-state expansion-stroke cylinder 12B passes beyond the compression TDC (YES in Step S23), the injected additional fuel is ignited (Step S25). Afterward, combustion will be performed according the normal engine control process.

When the determination in Step 7 is NO, the normal automatic restart control process, i.e., the restart control based on the reverse-rotation starting technique (non-assisted combustion-based starting technique), is continued (Step S29), and then shifted to the normal engine control process (Step S27).

The present invention has been described based on a specific embodiment thereof. It is understood that various changes and modifications may be made therein without departing from the spirit and scope of the present invention. Some examples of modification will be described below.

(1) While the fuel injection in the above embodiment is performed in an in-cylinder injection system using the fuel injection valve 16, a port injection system may be used. Comparing between these systems, the in-cylinder injection system is advantageous in sufficiently obtaining the effect of the additional fuel injection 86.

(2) In the above embodiment, the #1 cylinder 12A, the #2 cylinder 12B, the #3 cylinder 12C and the #4 cylinder 12D have been defined, respectively, as "stopped-state compression-stroke cylinder", "stopped-state expansion-stroke cylinder", "stopped-state intake-stroke cylinder" and "stopped-state exhaust-stroke cylinder", for the purpose of simplifying explanation. This relationship is not necessarily fixed, but may be changed every time the engine is automatically stopped. In this case, when it is identified which cylinder is a stopped-state expansion-stroke cylinder 12B, the remaining cylinders can be automatically identified, because an ignition order is not changed.

(3) The automatic engine stop control process defining a starting point of the automatic restart control process is not limited to the process in the above embodiment, but any other suitable automatic engine stop control process may be used. For example, an automatic engine stop control process which is not configured to stop a piston 13 within the adequate stop range R may also be employed in the present invention.

As mentioned above, the engine starting system of the present invention includes restart control means for performing an automatic restart control process of automatically restarting a multicylinder engine which is temporarily in a stopped state, in such a manner as to produce combustion in a first cylinder which is in a compression stroke during stop of the engine, in response to satisfaction of a given restart condition, to reversely rotate the engine, and then produce combustion in a second cylinder which is in an expansion stroke during stop of the engine, to generate a normal-directional torque in the engine. The engine starting system is characterized by comprising a starter motor adapted to apply a normal-directional driving force to the engine, wherein the restart control means is operable to execute a backed-up starting control strategy of activating the starter motor at a given timing in a course of the automatic restart control process, depending on the necessity, in such a manner that the backed-up starting control strategy is determined to be necessary, when any of the cylinders passes beyond a top dead center due to continuation of a reverse rotation state of the engine after the combustion for reversely rotating the engine, and the timing of applying the driving force from the starter motor in the backed-up starting control strategy is set around a time when the engine is shifted from the reverse rotation state to a normal rotation state. Additionally, the restart control means is operable to supply additional fuel to the second cylinder when it undergoes a compression stroke due to the continuation of the reverse rotation state.

The engine starting system of the present invention can provide enhanced restart quality in the event of the excessive reverse rotation occurring in an automatic restart control process based on the reverse-rotation starting technique, as described below.

In the event of the excessive reverse rotation, the piston is vibrated in a damped manner in a previous engine stroke relative to that at a time when the engine is automatically stopped (for example, a compression stroke in the second cylinder, i.e., the stopped-state expansion-stroke cylinder), and finally stopped. Thus, a timing when a moving direction of the piston is reversed in the previous engine stroke, corresponds to a timing when the engine is shifted from the reverse rotation state to the normal rotation state. In the present invention, this timing is figured out, and a driving force of the starter is applied to the engine at this timing. This makes it possible to quickly restart the engine as compared with a technique designed, for example, to restart the engine using a starter after the engine is fully stopped.

In addition, the engine speed becomes approximately zero at the above timing when the engine is shifted from the reverse rotation state to the normal rotation state. Thus, a load to be imposed on the starter can be reduced to suppress deterioration in durability of the starter. Then, additional fuel is injected into the stopped-state expansion-stroke cylinder 12B in the compression stroke caused by the excessive reverse rotation. The in-cylinder temperature/pressure is lowered by latent heat of vaporization of the additionally injected fuel to effectively suppress occurrence of auto-ignition in the stopped-state expansion-stroke cylinder 12B. The auto-ignition means a phenomenon that self-ignition occurs in a compression stroke due to a high in-cylinder temperature/pressure. If the auto-ignition occurs, a reverse-directional torque is generated to exert adverse effects on restart quality.

The excessive reverse rotation would be caused by occurrence of misfire or defective combustion in first combustion in the stopped-state expansion-stroke cylinder. Conversely, there is the possibility that some combustion is produced even if it is imperfect combustion. Thus, in the stopped-state expansion-stroke cylinder, resulting burnt gas is compressed (after the engine is shifted to the normal rotation state) in the compression stroke resulting from the excessive reverse rotation, without being discharged. Thus, auto-ignition is highly likely to occur in the stopped-state expansion-stroke cylinder.

In the present invention, fuel is supplied into the stopped-state expansion-stroke cylinder in the compression stroke to lower the in-cylinder temperature/pressure by latent heat of vaporization of the injected fuel so as to suppress the occurrence of auto-ignition.

This additional fuel is burnt in the subsequent expansion strike so as to generate a normal-directional torque. Air (oxygen) sufficient to produce combustion of the additional fuel still remains in the stopped-state expansion-stroke cylinder, because the first combustion in this cylinder has been imperfect.

The engine starting system of the present invention may include an electromagnetic valve operating mechanism adapted to openably and closably drive at least an intake valve based on an electromagnetic force. The electromagnetic valve operating mechanism may be operable to open the intake valve of the second cylinder, i.e., the stopped-state expansion-stroke cylinder, for a given period of time when the second cylinder is in the compression stroke to be subjected to the additional fuel supply, and the engine is in the normal rotation state

In this engine starting system, the intake valve of the stopped-state expansion-stroke cylinder is opened in its compression stroke caused by the excessive reverse rotation to allow the in-cylinder pressure to be lowered so as to further effectively suppress the occurrence of auto-ignition. In addition, an amount of the additional fuel can be reduced as compared with a backed-up starting control strategy configured to lower the in-cylinder pressure only by the additional fuel injection, and it can also be expected to introduce flesh air by opening the intake valve, so as to reduce smoke (black smoke) which is likely to be generated from combustion of the additionally injected fuel.

The engine starting system of the present invention may include an engine temperature detection means adapted to detect a temperature of the engine. The engine starting system may be operable, when the engine temperature detected by the engine temperature detection means is a given value or less, to prohibit the electromagnetic valve operating mechanism from opening the intake value for the given period of time.

In this engine starting system, when the engine temperature is relatively low, and therefore the risk of the occurrence of auto-ignition is relatively low, the open of the intake valve is prohibited to maintain the in-cylinder pressure at a high value so as to allow the additional fuel to produce high combustion energy.

In the engine starting system of the present invention, the restart control means may be operable to calculate the timing of initiating the activation of the starter motor, using an approximately midway point of any engine stroke in the reverse rotation state as a basis point of the calculation.

In this case, the timing for initiating the drive of the starter can be calculated readily and accurately, as described below.

The motion of the piston in the reverse rotation state is a damped vibration. This damped vibration has a characteristic that a change in cycle time is relatively small even if an amplitude fluctuates. Thus, a temporal midpoint in a period where a moving direction of the piston is reversed corresponds to a center of the damped vibration, i.e., a midpoint of the engine stroke.

In other word, a time period between the initiation of the excessive reverse rotation and the midpoint of the engine stroke (basis point) is approximately equal to a time between the basis point and a time when the engine is shifted from the reverse rotation state to the normal rotation state. Based on this relationship, a time period from the basis point to a timing of initiating the drive of the starter can be accurately calculated by subtracting a time lag in the drive of the starter from the time period from the initiation of the excessive reverse rotation to the basis point.

## Claims

1. An engine starting system including restart control means (2) for performing an automatic restart control process of automatically restarting a multicylinder engine which is temporarily in a stopped state, in such a manner as to produce combustion in a first cylinder (12A) which is in a compression stroke during stop of the engine, in response to satisfaction of a given restart condition, to reversely rotate the engine, and then produce combustion in a second cylinder (12B) which is in an expansion stroke during stop of the engine, to generate a normal-directional torque in the engine, said engine starting system comprising a starter motor (36) adapted to apply a normal-directional driving force to the engine, wherein:

   said restart control means (2) is operable to execute a backed-up starting control operation of activating said starter motor (36) at a given timing in a course of said automatic restart control process, and said timing of applying the driving force from said starter motor (36) in said backed-up starting control strategy is set around a time when the engine is shifted from the reverse rotation state to a normal rotation state,
   **characterized in that**
   said backed-up starting control operation is determined to be necessary, when any of the cylinders passes beyond a top dead center due to continuation of a reverse rotation state of the engine after said combustion for reversely rotating the engine, and
   said restart control means (2) being additionally operable to supply additional fuel to said second cylinder (12B) when it undergoes a compression stroke due to the continuation of said reverse rotation state to lower the in-cylinder temperature/pressure by latent heat of vaporization of the injected fuel so as to suppress the occurence of auto-ignition.

2. The engine starting system according to claim 1, further comprising an electromagnetic valve operating mechanism (48, 50) adapted to openably and closably drive at least an intake valve (19) based on an electromagnetic force, said electromagnetic valve operating mechanism (48, 50) being operable to open the intake valve (19) of said second cylinder (12B) for a given period of time when said second cylinder (12B) is in said compression stroke to be subjected to said additional fuel supply, and said engine is in the normal rotation state.

3. The engine starting system according to claim 2, further comprising an engine temperature detection means (33) adapted to detect a temperature of the engine, wherein said engine starting system is operable, when the engine temperature detected by said engine temperature detection means (33) is a given value or less, to prohibit said electromagnetic valve operating mechanism (48, 50) from opening said intake valve (19) for the given period of time.

4. The engine starting system according to any of claims 1 to 3, wherein said restart control means (2, 46) is operable to calculate the timing of initiating the activation of said starter motor (36), using an approximately midway point (t3) of any engine stroke in the reverse rotation state as a basis point of the calculation.

## Patentansprüche

1. Motoranlassersystem mit Wiederanlasssteuermittel (2) zum Durchführen eines automatischen Wiederanlasssteuerverfahrens zum automatischen Wiederanlassen eines Mehrzylindermotors, der vorübergehend in einem gestoppten Zustand ist, in einer derartigen Weise, um ansprechend auf die Erfüllung einer gegebenen Wiederanlassbedingung die Verbrennung in einem ersten Zylinder (12A) zu erzeugen, der während des Stopps des Motors in einem Verdichtungstakt ist, um den Motor umgekehrt zu rotieren, und dann die Verbrennung in einem zweiten Zylinder (12b) zu erzeugen, der während des Stopps des Motors in einem Ausdehnungtakt ist, um ein senkrecht gerichtetes Drehmoment in dem Motor zu erzeugen, wobei das Motoranlassersystem einen Anlassermotor (36) umfasst, der geeignet ist, eine senkrecht gerichtete Antriebskraft auf den Motor anzuwenden, wobei:

das Wiederanlasssteuermittel (2) betreibbar ist, einen gesicherten Anlasssteuerbetrieb zum Aktivieren des Anlassermotors (36) mit einem gegebenen Zeitablauf in einem Verlauf des automatischen Wiederanlasssteuerverfahrens auszuführen und der Zeitablauf zum Anwenden der Antriebskraft von dem Anlassermotor (36) in der gesicherten Anlasssteuerungsstrategie um eine Zeit herum festgelegt ist, wenn der Motor von dem umgekehrten Rotationszustand in einen normalen Rotationszustand geschaltet wird,

**dadurch gekennzeichnet, dass**

der abgesicherte Anlassersteuerbetrieb als notwendig bestimmt wird, wenn irgendeiner der Zylinder aufgrund der Fortsetzung eines umgekehrten Rotationszustands des Motors nach der Verbrennung zum umgekehrten Rotieren des Motors über einen oberen Totpunkt hinaus geht, und

das Wiederanlasssteuermittel (2) außerdem betreibbar ist, um zusätzlichen Brennstoff an den zweiten Zylinder (12B) zuzuführen, wenn er aufgrund der Fortsetzung des umgekehrten Rotationszustands einen Verdichtungstakt durchmacht, um die Temperatur/den Druck im Zylinder durch die latente Wärme der Verdampfung des eingespritzten Brennstoffs zu senken, um das Auftreten einer Selbstzündung zu unterdrücken.

2. Motoranlassersystem nach Anspruch 1, das ferner einen elektromagnetischen Ventilbetätigungsmechanismus (48, 50) umfasst, der geeignet ist, wenigstens ein Einlassventil (19) basierend auf einer elektromagnetischen Kraft öffenbar und schließbar anzutreiben, wobei der elektromagnetische Ventilbetätigungsmechanismus (48, 50) betreibbar ist, um das Einlassventil (19) des zweiten Zylinders (12B) für eine gegebene Zeitspanne zu öffnen, wenn der zweite Zylinder (12B) in dem Verdichtungstakt ist, um der zusätzlichen Brennstoffzuführung unterzogen zu werden, und der Motor in dem normalen Rotationszustand ist.

3. Motoranlassersystem nach Anspruch 2, das ferner ein Motortemperaturerfassungsmittel (33) umfasst, das geeignet ist, eine Temperatur des Motors zu erfassen, wobei das Motoranlassersystem betriebsfähig ist, wenn die von dem Motortemperaturerfassungsmittel (33) erfasste Motortemperatur einen vorgegebenen Wert oder weniger hat, um zu verhindern, dass der elektromagnetische Ventilbetätigungsmechanismus (48, 50) das Einlassventil (19) während der vorgegebenen Zeitspanne öffnet.

4. Motoranlassersystem nach einem der Ansprüche 1 bis 3, wobei das Wiederanlasssteuermittel (2, 46) betreibbar ist, um den Zeitablauf zum Auslösen der Betätigung des Anlassermotors (36) unter Verwendung eines ungefähren Mittelpunkts (t3) irgendeines Motortakts in dem umgekehrten Rotationszustand als einen Basispunkt der Berechnung zu berechnen.

**Revendications**

1. Système de démarrage de moteur incluant un moyen de régulation de redémarrage (2) pour accomplir un processus de régulation de redémarrage automatique consistant à redémarrer automatiquement un moteur à plusieurs cylindres qui est temporairement dans un état arrêté, de manière à produire une combustion dans un premier cylindre (12A) qui est dans une course de compression pendant l'arrêt du moteur, en réponse à la satisfaction à une condition de redémarrage donnée, afin de faire tourner le moteur dans le sens inverse, et à produire ensuite une combustion dans un second cylindre (12B) qui est dans une course d'expansion pendant l'arrêt du moteur, dans le but de générer un couple directionnel normal dans le moteur, ledit système de démarrage de moteur comprenant un moteur à starter (36) adapté de manière à exercer une force de commande directionnelle normale sur le moteur, dans lequel :

ledit moyen de régulation de redémarrage (2) est opérable pour exécuter une opération de régulation du démarrage de secours consistant à activer ledit moteur à starter (36) à un moment donné dans une course dudit processus de régulation de redémarrage automatique, et dans lequel ledit moment auquel la force de commande est exercée depuis ledit moteur à starter (36) dans ladite stratégie de régulation du démarrage de secours est ajustée aux alentours d'un temps lorsque le moteur est basculé depuis l'état de rotation inverse sur un état de rotation normal,

**caractérisé en ce que**

ladite opération de régulation du démarrage de secours est déterminée pour être nécessaire lorsqu'un quelconque des cylindres passe derrière un point mort supérieur en raison de la continuation d'un état de rotation inverse du moteur après ladite combustion dans le but de faire tourner le moteur dans le sens inverse, et ledit moyen de régulation de redémarrage (2) est en outre opérable pour fournir du carburant supplémentaire audit second cylindre (12B) lorsqu'il est soumis à une course de compression suite à la continuation dudit état de rotation inverse afin d'abaisser la température/pression à l'intérieur du cylindre par une chaleur latente de vaporisation du carburant injecté de manière à supprimer la circonstance de l'auto-allumage.

2. Système de démarrage de moteur conformément à la revendication 1, comprenant en outre un mécanisme (48, 50) qui fonctionne avec une soupape électromagnétique et qui est adapté de manière à commander au moins une soupape d'admission (19) avec possibilité d'ouverture et de fermeture sur la base d'une force électromagnétique, ledit mécanisme (48, 50) qui fonctionne avec une soupape électromagnétique étant opérable pour ouvrir la soupape d'admission (19) dudit second cylindre (12B) pendant une période de temps donnée lorsque ledit second cylindre (12B) est dans ladite course de compression qui doit être exposée à ladite alimentation en carburant supplémentaire, et dans lequel ledit moteur est dans l'état de rotation normal.

3. Système de démarrage de moteur conformément à la revendication 2, comprenant en outre un moyen de détection de la température du moteur (33) adapté de manière à détecter une température du moteur, dans lequel ledit système de démarrage de moteur est opérable lorsque la température du moteur détectée par ledit moyen de détection de la température du moteur (33) est une valeur donnée ou inférieure à celle-ci, afin d'empêcher que ledit mécanisme (48, 50) qui fonctionne avec une soupape électromagnétique ouvre ladite soupape d'admission (19) pendant la période de temps donnée.

4. Système de démarrage de moteur conformément à l'une quelconque des revendications 1 à 3, dans lequel ledit moyen de régulation de redémarrage (2, 46) est opérable pour calculer le moment d'initiation de l'activation dudit moteur à starter (36), utilisant un point approximativement médian (t3) d'une course de moteur quelconque dans l'état de rotation inverse comme un point de base du calcul.

# FIG. 1

| | ECU | 2 |
| --- | --- | --- |

FUEL INJECTION CONTROL SECTION 41

IGNITION CONTROL SECTION 42

INTAKE-AIR FLOW VOLUME CONTROL SECTION 43

GENERATOR OUTPUT CONTROL SECTION 44

PISTON POSITION DETECTION SECTION 45

STARTER CONTROL SECTION 46

ELECTROMAGNETIC VVT CONTROL SECTION 48

## FIG. 2

## FIG. 3A

TDC

90°CA

BDC

STOPPED-STATE
COMPRESSION-STROKE
CYLINDER

STOPPED-STATE
EXPANSION-STROKE
CYLINDER

## FIG. 3B

AIR VOLUME
IN STOPPED-STATE
COMPRESSION-STROKE
CYLINDER

AIR VOLUME
IN STOPPED-STATE
EXPANSION-STROKE
CYLINDER

0(TDC)　　　　90　　　　180(BDC)

PISTON STOP POSITION
[ATDC° CA]

# FIG. 4

## FIG. 5

```
        ┌──────────┐
        │  START   │
        └────┬─────┘
             │
             ▼
          ╱  S1  ╲
        ╱  IS ENGINE  ╲    NO
       ⟨   FULLY        ⟩ ─────┐
        ╲  STOPPED?   ╱        │
          ╲  YES   ╱           │
             │                 │
             ▼                 │
          ╱  S3  ╲             │
        ╱  IS ENGINE  ╲   NO   │
       ⟨ RESTART REQUEST ⟩ ────┤
        ╲  ISSUED?    ╱        │
          ╲  YES   ╱           │
             │                 │
             ▼             (loops back)
```

**S5** — PRODUCING COMBUSTION IN STOPPED-STATE COMPRESSION-STROKE CYLINDER

**S6** — PRODUCING COMBUSTION IN STOPPED-STATE EXPANSION-STROKE CYLINDER

**S7** — DOSE PISTON PASS BEYOND TDC IN REVERSE ROTATION DIRECTION ? — NO → **S29** CONTINUING NORMAL AUTOMATIC RESTART CONTROL PROCESS

YES ↓

**S9** — RVS ROTAION AND PREDETERMINED CRANK POSITION ? — NO

YES ↓

**S11** — DRIVING STARTER

( 1 )          ( 2 )

## FIG. 6

(1)

S13
NORMAL ROTATION STATE? ── NO

↓ YES

S14
ENGINE TEMPERATURE >PREDETERMINED VALUE ── NO

↓ YES

S15
OPENING INTAKE VALVE OF STOPPED-STATE COMPRESSION-STROKE CYLINDER USING ELECTROMAGNETIC VVT MECHANISM

↓

S17
IS PISTON AT GIVEN CRANK-ANGLE POSITION? ── NO

↓ YES

S18
CLOSING INTAKE VALVE OF STOPPED-STATE COMPRESSION-STROKE CYLINDER USING ELECTROMAGNETIC VVT MECHANISM

↓

S19
IS PISTON AT GIVEN CRANK-ANGLE POSITION? ── NO

↓ YES

S21
INJECTING FUEL INTO STOPPED-STATE COMPRESSION-STROKE CYLINDER IN COMPRESSION STROKE

↓

S23
DOES PISTON PASS BEYOND TDC? ── NO

↓ YES

S25
IGNITING AIR-FUEL MIXTURE IN STOPPED-STATE EXPANSION-STROKE CYLINDER

(2)

↓

S27
SHIFTING TO NORMAL ENGINE CONTROL

↓

( RETURN )

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005315197 A
- JP 2005 A
- JP 315197 A
- EP 1591658 A
- EP 1533501 A